# EUROPÄISCHE PATENTSCHRIFT

(11) **EP 0 382 008 B1**
(45) Veröffentlichungstag und Bekanntmachung des Hinweises auf die Patenterteilung: **07.04.1993**
(21) Anmeldenummer: 90101448.0
(22) Anmeldetag: 25.01.1990
(51) Int. Cl.: B60T 7/20

(54) **Zweiachsiger auflaufgebremster Fahrzeuganhänger mit Rückfahrautomatik**
Two-axle trailer with an automatic reverse overrun brake
Remorque à deux essieux à système de recul automatique pour dispositif de freinage par inertie

(30) Priorität: 06.02.1989 DE 3903476
(43) Veröffentlichungstag der Anmeldung: 16.08.1990
(73) Patentinhaber: Bergische Achsenfabrik Fr. Kotz & Söhne, 51674 Wiehl (DE)
(72) Erfinder: Johanns, Karl-Heinz, D-5223 Nümbrecht (DE); Dowe, Günther, Ing.-grad., D-5223 Nümbrecht (DE)
(74) Vertreter: Stenger, Watzke & Ring Patentanwälte

(56) Entgegenhaltungen:
- EP-A- 0 208 151
- DE-A- 2 058 566
- DE-C- 735 542
- DE-C- 3 523 336
- US-A- 2 221 929

## Beschreibung

Gegenstand der Erfindung ist ein zweiachsiger auflaufgebremster Fahrzeuganhänger mit Rückfahrautomatik, der ein ungelenktes Tandemfahrgestell oder eine gelenkte Vorderachse und Blattfederungen für die Achskörper hat, wobei die Bremskraft einer Betriebsbremse über eine erste mechanische Kraftübertragungseinrichtung von einer Auflaufeinrichtung auf drehfest mit einer Bremswelle verbundene Bremshebel und von diesen auf Bremsbacken von Trommel- oder Scheibenbremsen übertragen wird, wobei eine Aufhängung den zugehörigen Achskörper während einer Bremsung bei Vorwärtsfahrt durch einen Anschlag an einer Drehung hindert, wogegen die Aufhängung den Achskörper während einer Bremsung bei Rückwärtsfahrt entgegen einer Rückstellkraft aus seiner Ruhelage heraus begrenzt in Betätigungsrichtung des Bremshebels drehbar um seine eigene Achse lagert und wobei jede Bremswelle an einem freien Ende eines mit dem Achskörper drehfest verbundenen Achshebels drehbar gelagert ist.

Ein gattungsgemäßer Fahrzeuganhänger ist bereits aus der EP-PS 0 208 151 bekannt. Bei diesem Stand der Technik wird eine Rückfahrautomatik mit wenigstens einem, in seiner Aufhängung begrenzt drehbaren Achskörper verwirklicht. Die Aufhängung für den Achskörper kann aus Rohrabschnitten mit größerem Querschnitt als der Achskörper und eingesetzten Gummifederelementen bestehen. Sie kann aber auch von Gleitlagern gebildet werden, wobei an Achshebeln der Achskörper jeweils wenigstens eine Rückstellfeder angreift. Schließlich kann die Aufhängung aus unter dem Achskörper befestigten Stützhebeln, einer diese miteinander verbindenden Stützachse und einem Käfig bestehen, in dem die Stützachse gelagert ist. Wenn ein Fahrzeuganhänger mehrere Achsen aufweisen soll, ist die vorbekannte Rücklaufautomatik relativ aufwendig, weil sie entsprechend der Achsenzahl begrenzt drehbar gelagerte Achskörper gemäß dem vorstehend zusammengefassten Konstruktionsprinzipien aufweist.

Aus der DE-AS 2 058 566 ist eine Auflaufbremsanlage mit Rückfahrautomatik bekanntgeworden, die eine Feststellbremse mit einem Federspeicher hat, der zwischen einem Handbremshebel der Feststellbremse und einen Bowdenzug für die Bremsbetätigung geschaltet ist. Der Federspeicher verhindert das Lösen der Radbremsen, wenn das Fahrzeug an einem Hang abgestellt wird.

Davon ausgehend liegt der Erfindung die **Aufgabe** zugrunde, einen auflaufgebremsten Fahrzeuganhänger mit einer verbesserten Rückfahrautomatik zu schaffen, der insbesondere einen vereinfachten Aufbau aufweist und dennoch eine sichere Feststellbremsung ermöglicht.

Zur technischen **Lösung** dieser Aufgabe ist in Verbindung mit den Merkmalen eines gattungsgemäßen Fahrzeuganhängers vorgesehen, daß die Ausnutzung der Elastizität der Blattfederungen in Verbindung mit der mechanischen Kraftübertragungseinrichtung für die Bremsbetätigung beider Achsen in Kombination mit nur einem in seiner Aufhängung begrenzt drehbar angeordneten vorderen oder hinteren Achskörper als Rückfahrautomatik für die beiden Achsen des Fahrzeuganhängers genutzt wird, während der andere Achskörper nicht drehbar angeordnet bleibt.

Bei einem erfindungsgemäßen Fahrzeuganhänger wird die für die Rückfahrautomatik erforderliche begrenzte Drehung der Achskörper sowohl durch einen in seiner Aufhängung begrenzt drehbar angeordneten Achskörper, als auch durch die Elastizität der Blattfederungen bereitgestellt, die sowohl den begrenzt drehbar angeordneten Achskörper an seiner Aufhängung, als auch den starr mit ihnen verbundenen zweiten Achskörper tragen. Bei einer Rückfahrbewegung werden die beiden Achskörper um verschiedene Drehwinkel verdreht, was durch die gemeinsame mechanische Kraftübertragungseinrichtung zur Betätigung der Bremshebel ausgeglichen wird, so daß die Bremskräfte an sämtlichen Achsen in praktisch übereinstimmender Weise verringert werden. Somit werden bei einem erfindungsgemäßen Fahrzeuganhänger die Blattfederungen in Verbindung mit der mechanischen Kraftübertragungseinrichtung für die Bremsbetätigung ausgenutzt, um mit dem begrenzt drehbaren Achskörper nur einer Achse eine wirksame Rückfahrautomatik für den gesamten Anhänger zu bekommen.

Bei einer bevorzugten Ausgestaltung wird die Bremskraft von einer Feststellbremse über eine mechanische Kraftübertragungseinrichtung auf einen Bremshebel des in seiner Aufhängung nicht drehbar angeordneten Achskörpers übertragen, wodurch ein zusätzlicher Federspeicher zur Aufrechterhaltung der Feststellbremskraft entfallen kann, da die Bremskraft des nicht drehbar angeordneten Achskörpers auch bei an einer Steigung abgestelltem Anhänger selbsttätig praktisch nicht nachläßt.

Bei einer praktischen Ausgestaltung eines Fahrzeuganhängers mit Tandemfahrgestell weist die Kraftübertragungseinrichtung eine einenends gelenkig mit einem Zugstab der Auflaufeinrichtung verbundene Umlenkstange, die anderenends an einer Druckstange angelenkt ist, die gelenkig an einen Bremshebel des in Fahrtrichtung hinteren, in seiner Aufhängung begrenzt drehbar angeordneten Achskörpers angreift und greift die Umlenkstange mittig über eine Gelenkverbindung an einem Bremshebel für den in Fahrtrichtung vorderen Achskörper an. Bei einem Tandemfahrgestell wird bevorzugt mit diesem einfachen Bremsgestänge gearbeitet.

Bei einer Ausgestaltung des Fahrzeuganhängers mit dem vorstehenden Bremsgestänge greift die Feststellbremse über eine als Zugorgan ausgebildete mechanische Kraftübertragungseinrichtung an einem Ende eines Betätigungshebels an, der anderenends an einem Bremshebel des in Fahrtrichtung vorderen Achskörpers angelenkt ist und der mittig die Gelenkverbindung mit der Umlenkstange aufweist. Hierdurch kann die Bremskraft der Feststellbremse unmittelbar auf die Bremsen des vorderen Achskörpers einwirken, dessen Bremsen sich infolge der erfindungsgemäßen Rückfahrautomatik praktisch nicht lockern können.

Bei einer weiteren Ausgestaltung eines Fahrzeuganhängers mit Tandemfahrgestell sind in Fahrtrichtung benachbarte Blattfederungen mit benachbarten Enden jeweils an einem Ausgleichsarm abgestützt, der mittig schwenkbar am Fahrzeugrahmen gelagert ist. Durch diese begünstigte Ausführungsform wird die Tendenz der Achskörper verbessert, bei Rückwärtsfahrt in einer die Bremsen freigebenden Richtung zu drehen.

Bei einem Fahrzeuganhänger mit gelenkter Vorderachse umfasst bei einer bevorzugten Ausgestaltung die Kraftübertragungseinrichtung einen gelenkig an einer Haltestange der Auflaufeinrichtung gelagerten Waagebalken, in den beidenends Kabel eingehängt sind, die jeweils auf einen Bremshebel jeweils eines Achskörpers einwirken. Die Kabel ermöglichen eine einfache Kraftübertragung von einer an die gelenkte Vorderachse angelenkten Zugdeichsel mit Auflaufeinrichtung sowohl an die Vorder-, als auch an die Hinterachse.

Bei einer bevorzugten Ausgestaltung eines Fahrzeuges mit gelenkter Vorderachse und der vorstehend beschriebenen Kraftübertragungseinrichtung greift die Feststellbremse über eine mechanische Kraftübertragungseinrichtung aus einem Druckstab, einem Umlenkstab und einem Zugstab an einem am drehbaren Teil eines Drehschemels der gelenkten Vorderachse schwenkbar gelagerten Betätigungselement gelenkig an, wobei das Betätigungselement mit Hebelarmen in Gabelgelenke eingreift, welche die in den Waagebalken eingehängten Kabel mit zu den Bremshebeln geführten Kabeln verbinden, wobei die Hebelarme von Gabelgelenkbolzen durchstoßen werden. Bei dieser Ausgestaltung ist gesichert, daß die Bremskraft der Feststellbremse stets zu dem Achskörper geleitet wird, ohne daß durch die Rückfahrautomatik eine merkliche nachträgliche Schwächung der Bremswirkung eintreten kann.

Aufgrund seines einfachen Aufbaues ist der erfindungsgemäße Fahrzeuganhänger besonders für eine Nutzung im landwirtschaftlichen Bereich geeignet.

Weitere Einzelheiten und Vorteile ergeben sich aus der nachfolgenden Beschreibung der zugehörigen Zeichnungen, in denen verschiedene Ausführungsformen eines erfindungsgemäß ausgebildeten Fahrzeuganhängers schematisch in Ansichten und Schnitten dargestellt worden sind. In den Zeichnungen zeigen:
- Fig. 1: ein Fahrzeuganhänger mit Tandemfahrgestell und begrenzt drehbarer Hinterachse bei Vorwärtsfahrt in Seitenansicht;
- Fig. 2: denselben Fahrzeuganhänger gemäß Fig. 1 in der Draufsicht, wobei die Betriebsbremse in einem Fahrzeugrahmen mit ausgezogenen Linien und die Feststellbremse in einem Fahrzeugrahmen mit gestrichelten Linien gezeichnet sind;
- Fig. 3: denselben Fahrzeuganhänger gemäß Fig. 1 bei Rückwärtsfahrt in der Seitenansicht;
- Fig. 4: einen Fahrzeuganhänger mit gelenkter Vorderachse und begrenzt drehbar gelagerter Vorderachse bei Vorwärtsfahrt entlang der Linie IV-IV der Fig. 5 geschnitten;
- Fig. 5: denselben Fahrzeuganhänger in der Draufsicht;
- Fig. 6: denselben Fahrzeuganhänger entlang der Linie VI-VI der Fig. 5 geschnitten in vergrößerter Darstellung;
- Fig. 7: denselben Fahrzeuganhänger bei Rückwärtsfahrt entlang der Linie VIII-VIII der Fig. 8 geschnitten;
- Fig. 8: denselben Fahrzeuganhänger in der Draufsicht;
- Fig. 9: denselben Fahrzeuganhänger entlang der Linie IX-IX der Fig. 8 geschnitten in vergrößerter Darstellung;
- Fig. 10: einen Fahrzeuganhänger mit gelenkter Vorderachse und begrenzt schwenkbar gelagerter Hinterachse bei Vorwärtsfahrt entlang der Linie X-X der Fig. 11 geschnitten;
- Fig. 11: denselben Fahrzeuganhänger in der Draufsicht;
- Fig. 12: denselben Fahrzeuganhänger entlang der Linie XII-XII der Fig. 11 geschnitten in vergrößerter Darstellung;
- Fig. 13: denselben Fahrzeuganhänger bei Rückwärtsfahrt entlang der Linie XIII-XIII der Fig. 14 geschnitten;
- Fig. 14: denselben Fahrzeuganhänger in der Draufsicht;
- Fig. 15: denselben Fahrzeuganhänger entlang der Linie XV-XV der Fig. 14 geschnitten in vergrößerter Darstellung.

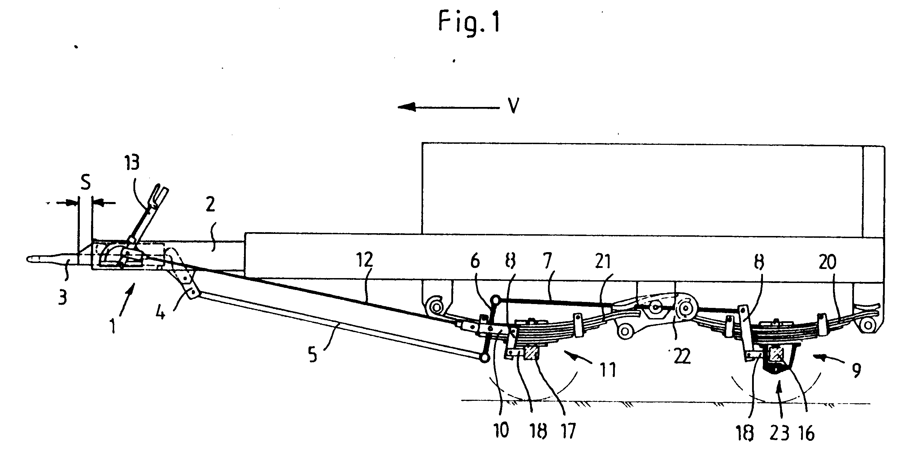

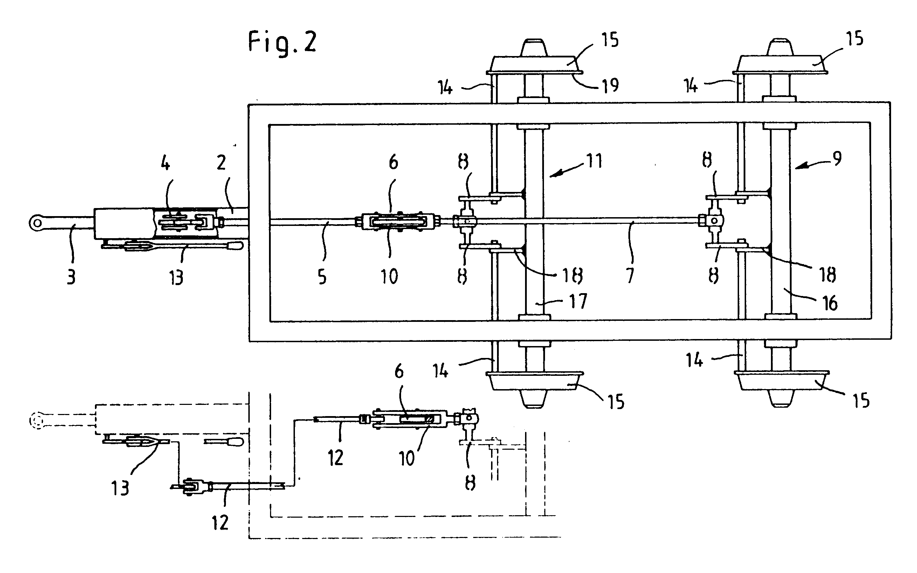

Bei dem in den Fig. 1 bis 3 dargestellten, auflaufgebremsten Fahrzeuganhänger arbeitet eine mechanische Auflaufeinrichtung 1 bestehend aus einem Führungsrohr 2 für eine Zugstange 3, einen Übertragungshebel 4 und einen Zugstab 5 über eine erste Kraftübertragungseinrichtung aus einer Umlenkstange 6 und einer Druckstange 7 mit Bremshebeln 8 einer Hinterachse 9 zusammen. Zur ersten Kraftübertragungseinrichtung gehört auch ein Betätigungshebel 10, an dem die Umlenkstange 6 mittig gelagert ist und der einenends an Bremshebeln 8 einer Vorderachse 11 angreift und anderenends mit einem Zugorgan 12 verbunden ist. Das Zugorgan 12 bildet ein zweites mechanisches Kraftübertragungssystem, welches von einer Feststellbremse 13 betätigt werden kann. Die Feststellbremse 13 ist in Fahrtrichtung vorne an dem Führungsrohr 2 angebracht.

Dabei wird die beim Auflaufen erzeugte Bremskraft über die Bremshebel 8 und Bremswellen 14 auf Bremsbacken von Bremsen 15 übertragen. Die Bremswellen 14 sind einerseits in drehfest mit Achskörpern 16,17 verbundenen Achshebeln 18 und andererseits in Bremsschilden 19 der Bremsen 15 drehbar gelagert. Sowohl die Hinterachse 9, als auch die Vorderachse 11 weisen Blattfederungen 20,21 auf, die rahmenseitig in bekannter Weise mit Augenbefestigungen bzw. Stützlagern und Rollen abgestützt sind. Die in Fahrtrichtung hintereinanderliegenden Blattfederungen 20,21 sind an den einander zugewandten Enden an jeweils einem Ausgleichsarm 22 abgestützt, der zwischen den Abstützpunkten schwenkbar am Fahrzeugrahmen gelagert ist.

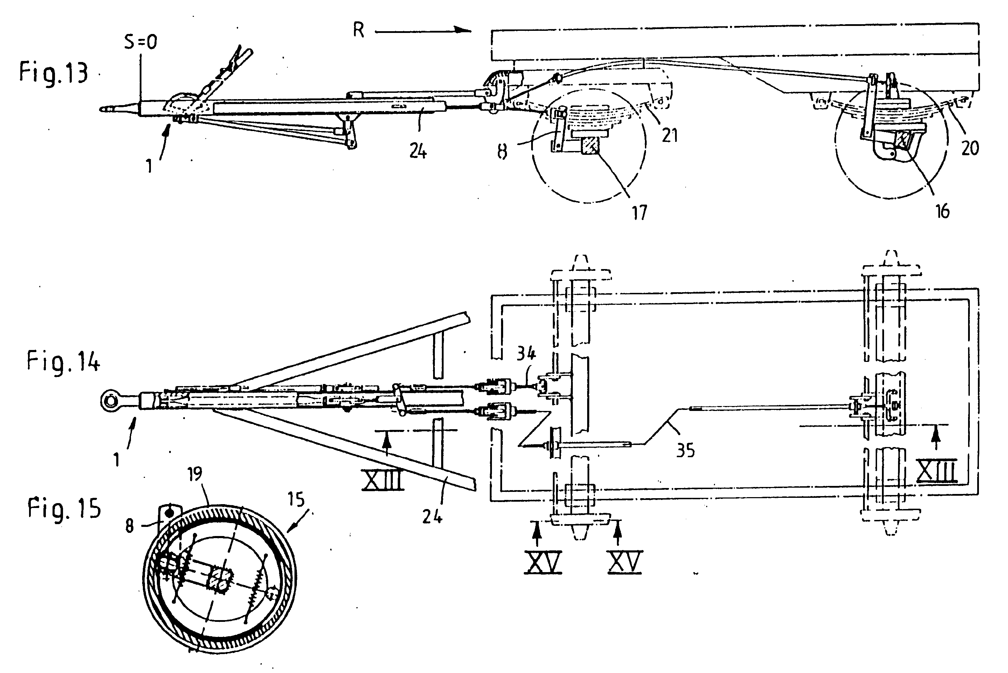

Der Achskörper 16 der Hinterachse 9 ist in eine Aufhängung 23 eingesetzt, die eine begrenzte Drehbarkeit im Uhrzeigersinn ermöglicht. Die Aufhängung 23 aus unter dem Achskörper befestigten Stützhebeln, einer diese miteinander verbindenden Stützachse und einem Käfig für die Lagerung der Stützachse und Begrenzung der Schwenkbewegung des Achskörpers 16 ist näher in der EP-PS 0 208 151 beschrieben, auf die insoweit Bezug genommen wird. Insbesondere ist diese Aufhängung Gegenstand der Ansprüche 8 bis 11 dieser Druckschrift und in den Fig. 15 bis 18 sowie den zugehörigen Beschreibungsteilen dargestellt und beschrieben.

Der Achskörper 17 der Vorderachse 11 ist starr mit der tragenden Blattfederung 21 verbunden.

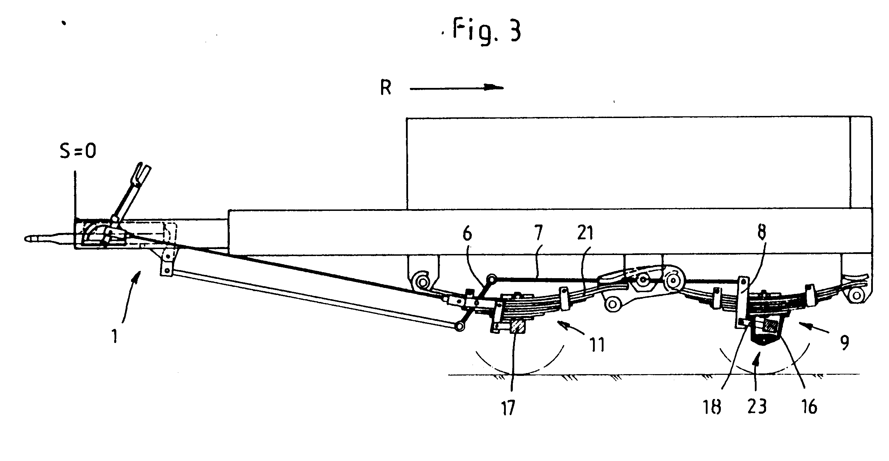

Nachfolgend wird anhand der Fig. 1 und 3 der Aufbau einer Bremskraft bei Vorwärtsfahrt und deren Abbau bei Rückwärtsfahrt erläutert. Bei einer Bremsung in Vorwärtsfahrt V wird unter Verringerung eines Auflaufweges S von der Auflaufeinrichtung 1 über Umlenkstange 6, Druckstange 7 und Betätigungshebel 10 eine Bremskraft auf die Bremshebel 8 übertragen, welche über die Bremswellen 14 die Bremsen 15 betätigen. Hierbei werden die Bremshebel 8 der Hinterachse 9 von der Druckstange 7 im Uhrzeigersinn und die Bremshebel 8 der Vorderachse 11 von den Betätigungshebeln 10 und der sich an der Druckstange 7 abstützenden, von der Zugstange 5 bewegten Umlenkstange 6 im Gegenuhrzeigersinn bewegt. Voraussetzung hierfür ist, daß das Zugorgan 12 eine Bewegung des Betätigungshebels 10 zuläßt, wozu es beispielsweise als Zugseil ausgeführt sein kann oder als Zugstange, die zumindest einseitig mit einem bei Druckbeanspruchung in einer Aufhängung verschieblichen Anschlag versehen ist.

Bei Rückwärtsfahrt R geschieht am Anfang genau das gleiche, bis der maximale Auflaufweg S an der Auflaufeinrichtung 1 erschöpft ist. Durch die einsetzende Bremswirkung wird der Achskörper 16 der Hinterachse 9 gegen die Wirkung eines sich durch seine Aufhängung 23 ergebenden Rückstellmomentes verschwenkt, wobei gleichzeitig der Abstützpunkt der Druckstange 7 ausweicht, weil die Bremshebel 8 mit den am Achskörper 16 befestigten Achshebeln 18 verschwenkt werden. Bei einsetzender Bremswirkung weicht somit der Bremshebel 8 einer Bremsbetätigung durch die Druckstange 7 aus, wodurch bis auf einen zulässigen Rest keine Bremskraft mehr in die Bremsen 15 der Hinterachse 9 eingeleitet wird.

Zugleich wird auch die Bremswirkung an der Vorderachse 11 bis auf einen zulässigen Rest vermindert, weil durch die Schwenkbewegung des hinteren Achskörpers 16 der Abstützpunkt der Umlenkstange 6 an der Druckstange 7 weiter nach rechts auswandert und von vornherein nur eine verminderte Bremskraft in die Bremsen 15 der Vorderachse 11 eingeleitet wird. Es kommt noch hinzu, daß der vordere Achskörper 17 beim Einsetzen einer geringfügigen Bremskraft mit den Blattfederungen 21 geringfügig geschwenkt wird, wodurch auch die Bremshebel 8 der Vorderachse 11 einer Betätigung durch den Betätigungshebel 10 ausweichen. Somit kann der Fahrzeuganhänger praktisch ohne Bremswirkung rückwärts gefahren werden.

Bei einer Drehrichtungsumkehr in Vorwärtsfahrt V werden die Achskörper 16 und 17 auch aufgrund der Rückstellkraft der Aufhängung 23 und der Federwirkung der Blattfedern 21 wieder in ihre normale Bremslage bei Vorwärtsfahrt zurückgeführt, so daß die gewünschte Auflaufbremsung erfolgen kann.

Bei Betätigung der Feststellbremse 13 werden die Bremshebel 8 der Vorderachse 11 über den Betätigungshebel 10 und das Zugorgan 12 im Gegenuhrzeigersinn bewegt, ohne daß ein nennenswertes, durch die erfindungsgemäße Rückfahrautomatik bedingtes Spiel überwunden werden müßte. Dies beruht insbesondere darauf, daß die Kraftübertragung von der Feststellbremse 13 zu den Betätigungshebeln 8 der Vorderachse 11 unabhängig von dem Kraftübertragungsweg zwischen der Auflaufeinrichtung 1 zu den Betätigungshebeln 8 der Hinterachse 9 erfolgt, indem sich das für die Rückfahrautomatik wesentliche Spiel bemerkbar macht. Andererseits ist es für die Praxis ausreichend, daß die Feststellbremse 13 im wesentlichen nur auf die Vorderachse 11 wirkt.

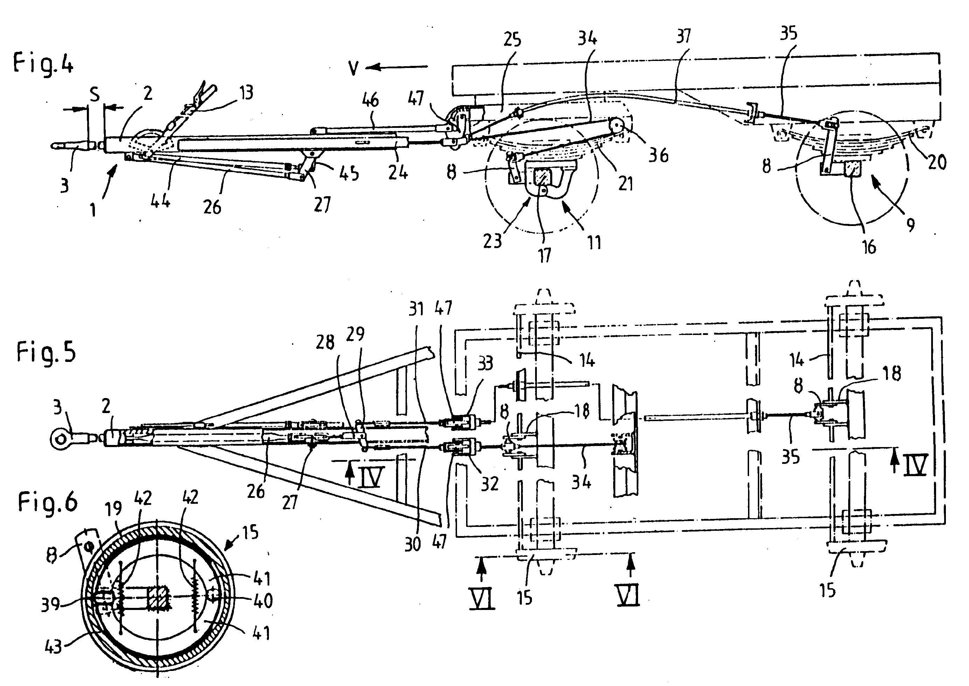

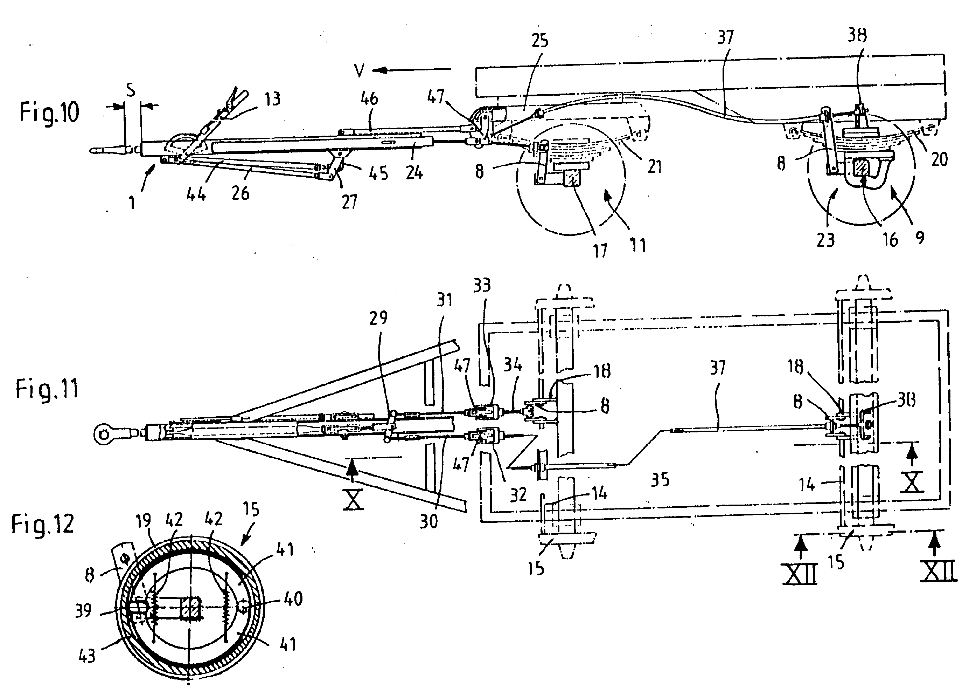

Bei den Ausführungsformen gemäß den Fig. 4 bis 15 ist die jeweils eine Auflaufeinrichtung 1 in eine Zugdeichsel 24 integriert, die schwenkbar an einem Drehschemel 25 für eine Vorderachse 11 angelenkt ist. Vorderachse 11 und Hinterachse 9 weisen jeweils Blattfederungen 20,21 auf, wobei die Blattfederung 21 drehschemelfest und die Blattfederung 20 rahmenfest angeordnet sind. Der wesentliche Unterschied zwischen den Ausführungsformen gemäß den Fig. 4 bis 9 und den Ausführungsformen gemäß den Fig. 10 bis 15 besteht darin, daß bei der ersteren die Vorderachse 11 einen in einer Aufhängung 23 begrenzt drehbar angeordneten Achskörper 17 und bei der letzteren die Hinterachse 9 einen in einer entsprechenden Aufhängung 23 begrenzt drehbar angeordneten Achskörper 16 aufweist. Die Aufhängungen 23 der begrenzt drehbaren Achskörper 17,16 entsprechen derjenigen des Ausführungsbeispieles gemäß den Fig. 1 bis 3.

Bei beiden Ausführungsformen gemäß den Fig. 4 bis 15 besteht die mechanische Auflaufeinrichtung 1 aus einem Führungsrohr 2, in das eine Zugstange 3 eingesetzt ist, die über einen angelenkten Druckstab 26 auf einen Umlenkhebel 27 einwirkt. An den Umlenkhebel 27 ist eine Haltestange 28 mit einem Waagebalken 29 angelenkt. In den Waagebalken 29 sind beidenends Kabel 30,31 für die Steuerung der Bremsen 15 der Vorderachse 11 bzw. Hinterachse 9 eingehängt. Die Kabel 30,31 sind über Gabelgelenke 32,33 mit weiteren Kabeln 34,35 verbunden, die bei den betrachteten beiden Ausführungsformen auf verschiedene Weise zu Bremshebeln 8 für die Bremsen 15 der Vorderachse 11 bzw. Hinterachse 9 geführt sind.

Bei der Ausführungsform gemäß den Fig. 4 bis 9 ist das Kabel 34 über eine in Fahrtrichtung hinter dem Achskörper 17 liegende Umlenkrolle 36 an den Bremshebel 8 geführt, so daß dieser von einer Bremskraft im Uhrzeigersinn bewegt wird. Das Kabel 35 dieser Ausführungsform ist durch einen rahmenseitig gehalterten Schlauch 37 zu den Bremshebeln 8 der Hinterachse 9 geführt, so daß diese im Gegenuhrzeigersinn betätigt werden können.

Bei der Ausführungsform gemäß den Fig. 10 bis 15 ist das Kabel 34 von dem Gabelgelenk 33 ausgehend unmittelbar an die Bremshebel 8 der Vorderachse 11 geführt, so daß dieser wiederum im Gegenuhrzeigersinn betätigt werden kann. Das Kabel 35 für die Bremshebel 8 der Hinterachse 9 hingegen ist durch einen einerseits rahmenseitig abgestützten Schlauch 37 zu einem fest mit der Achsaufhängung 23 verbundenen Abstützpunkt 38 geführt, wobei der Schlauch 37 andererseits an den Bremshebeln 8 abgestützt ist, so daß diese unter dem Einfluß einer Bremskraft im Uhrzeigersinn gedreht werden.

Die Betätigungshebel 8 beider Ausführungsformen sind drehfest an den Enden von Bremswellen 14 angeordnet, welche wiederum zu den Bremsen 15 geführt und einerseits in achskörperfesten Achshebeln 18 und andererseits in ebenfalls achskörperfesten Bremsschilden gelagert sind.

Wie aus den Fig. 6 und 12 ersichtlich ist, sind die Bremsen 15 als Trommelbremsen ausgebildet, bei denen die durch das Auflaufen erzeugte Bremskraft auf mit den Bremswellen 14 verbundene Bremsnocken 39 übertragen wird, welche an einem Stützlager 40 abgestützte Bremsbacken 41 entgegen der Kraft von Rückstellfedern 42 zur Anlage an einer Bremstrommel 43 bringen. Bremsnocken 39 und Stützlager 40 sind auf einem achskörperfesten Bremsschild 19 montiert. Ein solche Trommelbremse 15 kann auch bei einem Fahrzeuganhänger gemäß den Fig. 1 bis 3 zum Einsatz kommen.

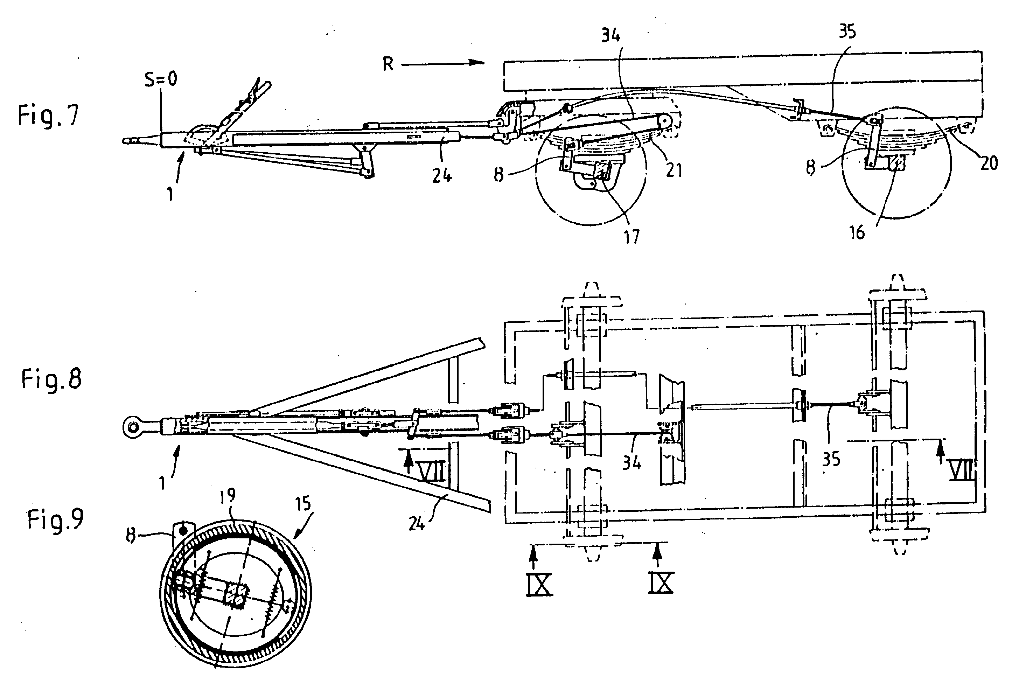

Bei den beiden Ausführungsformen gemäß den Fig. 4 bis 15 wird bei einer Bremsung in Vorwärtsfahrt V unter Verringerung eines Auflaufweges S von der Auflaufeinrichtung 1 über die Kabel 30,31 und 34,35 eine Bremskraft auf die Bremshebel 8 übertragen und von diesen über die Bremswellen in Zugspannmomente an den Bremsnocken 39 umgewandelt. Hierzu wird das Kabel 35 der Ausführungsform gemäß den Fig. 7 bis 12 zwischen dem Gabelgelenk 32 und dem Abstützpunkt 38 gestreckt, so daß der einseitig am Rahmen abgestützte Schlauch 37 die Bremshebel 8 verstellt. Im übrigen werden die Bremshebel 8 beider Ausführungsform von den Kabeln unmittelbar angezogen.

Bei der in den Fig. 7 bis 9 und 13 bis 15 dargestellten Rückwärtsfahrt R wird wiederum zunächst der maximale Auflaufweg S an der Auflaufeinrichtung 1 erschöpft. Dies wird wiederum durch eine Drehung insbesondere des begrenzt drehbar gelagerten Achskörpers 17 bzw. 16 und eine unterstützende Drehung durch den starr mit den Blattfedern verbundenen Achskörper 16 bzw. 17 ermöglicht. Hierbei ermöglicht der Waagebalken 29, daß die verschiedenen Drehbewegungen der beiden Achskörper 16,17 ausgeglichen werden und zu einer praktisch übereinstimmenden Minderung der Bremskraft der Bremsen der Vorderachse 11 und der Hinterachse 9 führen. Wie die Fig. 9 und 15 zeigen, beruht die erwünschte Minderung der Bremswirkung insbesondere an den begrenzt drehbar gelagerten Achskörpern 17,16 darauf, daß der von dem Achskörper 17,16 mitgenommene Bremsschild 19 sowie die Bremshebel 8 in Betätigungsrichtung der Bremshebel 8 auswandern, wodurch einer Drehung der Betätigungshebel 8 relativ zu dem Bremsschild 19 entgegengewirkt wird.

Bei einer Drehrichtungsumkehr in Vorwärtsfahrt V wird der drehbar gelagerte Achskörper 16 unter Wirkung des Rückstellmomentes der Aufhängung 23 in seine normale Bremslage bei Vorwärtsfahrt zurückgeführt, wodurch die erwünschte Auflaufbremsung möglich ist.

Die Ausführungsformen gemäß den Fig. 4 bis 15 sind für eine Feststellbremsung jeweils mit übereinstimmenden Bauteilen ausgerüstet. Eine als zweiarmiger Hebel ausgebildete Feststellbremse 13 ist über einen Druckstab 44 und einen Umlenkstab 45 mit einem Zugstab 46 verbunden. Der Zugstab 46 ist gelenkig an einem Betätigungselement 47 gelagert, welches in einem Abstand vom Anlenkpunkt des Zugstabes 46 am drehbaren Teil des Drehschemels 25 schwenkbar gelagert ist und mit einem Hebelarm in ein Gabelgelenk 33 eingreift, und dort von einem Gabelgelenkbolzen durchstoßen wird.

Bei einer normalen Auflaufbremsung oder bei Rückwärtsfahrt wird das Betätigungselement 47 von den Kabeln 30,31 um seinen drehschemelfesten Lagerpunkt geschwenkt. Um ein Schwenken der Feststellbremse 13 zu vermeiden, kann der Zugstab 46 teleskopartig ausgebildet sein und einen in Zugrichtung wirksamen Anschlag aufweisen. Bei einer Betätigung der Feststellbremse 13 wird das Betätigungselement 47 durch den Zugstab 46 im Uhrzeigersinn um seine drehschemelfeste Lagerung geschwenkt, wobei das Gabelgelenk 33 von dem eingreifenden Hebelarm des Betätigungselementes 47 in Fahrtrichtung bewegt wird und eine Bremskraft in das Kabel 35 einleitet. Soweit diese Bremskraft einer Achse mit einem nichtdrehbar gelagerten Achskörper 16 zugeführt wird, wird sie praktisch nicht durch ein auf die Rückfahrautomatik zurückzuführendes Spiel gemindert, so daß eine sichere Feststellbremsung ohne einen zusätzlichen Federspeicher möglich ist.

## Patentansprüche

1. Fahrzeuganhänger mit zwei auflaufgebremsten Achsen und mit einer Rückfahrautomatik,
der ein ungelenktes Tandemfahrgestell oder eine gelenkte Vorderachse und Blattfederungen (20,21) für die Achskörper (16,17) hat,
wobei die Bremskraft einer Betriebsbremse über eine gemeinsame mechanische Kraftübertragungseinrichtung von einer Auflaufeinrichtung (1) auf drehfest mit Bremswellen (14) verbundene Bremshebel (8) und von diesen auf Bremsbacken (41) von Trommel- oder Scheibenbremsen an beiden Achskörpern (16,17) übertragen wird,
wobei eine Aufhängung (23) den zugehörigen vorderen und hinteren Achskörper (16,17) während einer Bremsung bei Vorwärtsfahrt durch einen Anschlag an einer Drehung hindert, wogegen die Aufhängung (23) den Achskörper (16,17) während einer Bremsung bei Rückwärtsfahrt entgegen einer Rückstellkraft aus einer Ruhelage heraus begrenzt in Betätigungsrichtung des Bremshebels (8) drehbar um seine eigene Achse lagert und
wobei jede Bremswelle (14) an einem freien Ende eines mit dem Achskörper (16,17) drehfest verbundenen Achshebels (18) drehbar gelagert ist,
**gekennzeichnet** **durch**,
die Ausnutzung der Elastizität der Blattfederungen (20,21) in Verbindung mit der mechanischen Kraftübertragungseinrichtung für die Bremsbetätigung beider Achsen in Kombination mit nur einem in seiner Aufhängung (23) begrenzt drehbar angeordneten vorderen oder hinteren Achskörper (16,17) als Rückfahrautomatik für die beiden Achsen des Fahrzeuganhängers, während der andere Achskörper (16,17) nicht drehbar angeordnet ist.

2. Fahrzeuganhänger nach Anspruch 1 mit einer Feststellbremse, dadurch gekennzeichnet, daß die Bremskraft von einer Feststellbremse (13) über eine zweite mechanische Kraftübertragungseinrichtung auf einen Bremshebel (8) des in seiner Aufhängung (23) nicht drehbar angeordneten Achskörpers (16,17) übertragen wird.

3. Fahrzeuganhänger mit Tandemfahrgestell nach Anspruch 1, dadurch gekennzeichnet, daß die Kraftübertragungseinrichtung eine einenends gelenkig mit einem Zugstab (5) der Auflaufeinrichtung (1) verbundene Umlenkstange (6) aufweist, die anderenends an einer Druckstange (7) angelenkt ist, die gelenkig an einen Bremshebel (8) des in Fahrtrichtung hinteren, in seiner Aufhängung begrenzt drehbar angeordneten Achskörpers (16) angreift, und daß die Umlenkstange (6) über eine Gelenkverbindung an einen Bremshebel (8) für den in Fahrtrichtung vorderen Achskörper (17) angreift.

4. Fahrzeuganhänger nach den Ansprüchen 2 und 3, dadurch gekennzeichnet, daß die Feststellbremse (13) über eine als Zugorgan (12) ausgebildete zweite mechanische Kraftübertragungseinrichtung an einem Ende eines Betätigungshebels (10) angreift, der anderenends an mindestens einem Bremshebel (8) des in Fahrtrichtung vorderen Achskörpers (17) angelenkt ist und der mittig die Gelenkverbindung mit der Umlenkstange (6) aufweist.

5. Fahrzeuganhänger mit Tandemfahrgestell nach einem der Ansprüche 1 bis 4, dadurch gekennzeichnet, daß die in Fahrtrichtung benachbarten Blattfederungen (20,21) mit benachbarten Enden jeweils an einem Ausgleichsarm (22) abgestützt sind, der mittig schwenkbar am Fahrzeugrahmen gelagert ist.

6. Fahrzeuganhänger mit gelenkter Vorderachse nach Anspruch 1, dadurch gekennzeichnet, daß die Kraftübertragungseinrichtung einen gelenkig an einer Haltestange (28) der Auflaufeinrichtung (1) gelagerten Waagebalken (29) umfasst, in dem beidenends Kabel (30,31) eingehängt sind, die jeweils auf einen Bremshebel (8) jeweils eines Achskörpers (16,17) einwirken.

7. Fahrzeuganhänger nach den Ansprüchen 2 und 5, dadurch gekennzeichnet, daß die Feststellbremse (13) über eine mechanische Kraftübertragungseinrichtung aus einem Druckstab (44), einem Umlenkstab (45) und einem Zugstab (46) an einem am drehbaren Teil eines Drehschemels (25) der gelenkten Vorderachse (11) schwenkbar gelargerten, Betätigungselement (47) gelenkig angreift, wobei das Betätigungselement (47) mit Hebelarmen in Gabelgelenke (32,33) eingreift, welche die in den Waagebalken (29) eingehängten Kabel (30,31) mit zu den Bremshebeln (8) geführten Kabeln (34,35) verbinden, wobei die Hebelarme von den Gabelgelenkbolzen durchstoßen werden.

## Claims

1. Vehicle trailer with two axles subject to overrun braking and with an automatic reversing system, which trailer has an unsteered tandem suspension or a steered front axle and leaf spring assemblies (20, 21) for the axle beams (16, 17), the braking force of a service brake being transmitted via a common mechanical force-transmission device from an overrun device (1) to brake levers (8) rotationally connected to brake shafts (14) and from the said brake levers to brake shoes (41) of drum or disc brakes at both axle beams (16, 17), a mounting (23) preventing the associated front and rear axle beams (16, 17) from rotating during a braking operation during forward travel by means of a stop, whereas, during a braking operation during rearward travel, the mounting (23) supports the axle beam (16, 17) in a manner which allows limited rotation about its own axis, counter to a restoring force, out of a rest position in the actuation direction of the brake lever (8), and each brake shaft (14) being rotatably mounted on a free end of an axle lever (18) rotationally connected to the axle beam (16, 17), characterised by the use of the elasticity of the leaf spring assemblies (20, 21) in conjunction with the mechanical force-transmission device for brake actuation at both axles in combination with just one front or rear axle beam (16, 17), which is arranged in a manner which allows limited rotation in its mounting (23), as an automatic reversing system for the two axles of the vehicle trailer, while the other axle beam (16, 17) is arranged in non-rotatable fashion.

2. Vehicle trailer according to Claim 1 with a parking brake, characterised in that the braking force is transmitted from a parking brake (13), via a second mechanical force-transmission device, to a brake lever (8) of the axle beam (16, 17) arranged in non-rotatable fashion in its mounting (23).

3. Vehicle trailer with a tandem suspension according to Claim 1, characterised in that the force-transmission device has a reversing rod (6) which is connected at one end in articulated fashion to a tie rod (5) of the overrun device (1) and, at the other end, is articulated on a push rod (7) which acts in articulated fashion on a brake lever (8) of the rear (in the direction of travel) axle beam (16), which is arranged in a manner which allows limited rotation in its mounting, and in that the reversing rod (6) acts via an articulated connection on a brake lever (8) for the front (in the direction of travel) axle beam (17).

4. Vehicle trailer according to Claims 2 and 3, characterised in that the parking brake (13) acts via a second mechanical force-transmission device designed as a tensile member (12) on one end of an actuating lever (10) which is articulated at the other end on at least one brake lever (8) of the front (in the direction of travel) axle beam (17) and which has the articulated connection to the reversing rod (6) at the centre.

5. Vehicle trailer with a tandem suspension according to one of Claims 1 to 4, characterised in that the leaf spring assemblies (20, 21), which are adjacent in the direction of travel, are each supported by adjacent ends on a compensating arm (22) which is centrally supported in pivotable fashion on the vehicle frame.

6. Vehicle trailer with a steered front axle according to Claim 1, characterised in that the force-transmission device comprises a balance beam (29) which is supported in articulated fashion on a holding rod (28) of the overrun device (1) and in which are suspended at both ends cables (30, 31) which each act on a brake lever (8) of a respective axle beam (16, 17).

7. Vehicle trailer according to Claims 2 and 5, characterised in that the parking brake (13) acts, via a mechanical force-transmission device comprising a push rod (44), a reversing rod (45) and a tie rod (46), on an actuating element (47) pivotably mounted on the rotatable part of a fifth wheel (25) of the steered front axle (11), the actuating element (47) engaging by means of lever arms in fork joints (32, 33) which connect the cables (30, 31) suspended in the balance beams (29) to cables (34, 35) passed to the brake levers (8), the lever arms being penetrated by the fork-joint pins.

## Revendications

1. Remorque à deux essieux à freinage par inertie et à système de recul automatique, qui comporte un châssis en tandem non directeur ou un essieu avant directeur et des ressorts à lames (20, 21) pour les corps d'essieux (16, 17), la force de freinage d'un frein de service étant transmise, par un dispositif mécanique commun de transmission des forces, d'un dispositif à inertie (1) à des leviers de freinage (8) liés en rotation à des axes de freins (14) et, de ces derniers, à des mâchoires (41) de freins à tambour ou à disque montés sur les deux corps d'essieux (16, 17), une suspension (23) empêchant, par l'intermédiaire d'une butée, les corps d'essieux avant et arrière associés (16, 17) de tourner lors d'un freinage en marche avant, la suspension (23) des corps d'essieux (16, 17) pouvant, au contraire, tourner autour de son propre axe, de manière limitée et à partir d'une position de repos, dans la direction d'actionnement du levier de freinage (8), à l'encontre d'une force de rappel lors d'un freinage en marche arrière, et chaque axe de frein (14) étant monté en rotation à une extrémité libre d'un levier d'essieu (18) lié en rotation au corps d'essieu (16, 17), caractérisée par l'exploitation de l'élasticité des ressorts à lames (20, 21) associés au dispositif mécanique de transmission des forces pour actionner les freins des deux essieux en combinaison avec un seul corps d'essieu avant ou arrière (16, 17) qui est monté en rotation de manière limitée dans sa suspension et qui fait fonction de système de recul automatique pour les deux essieux de la remorque, tandis que l'autre corps d'essieu (16, 17) reste monté de manière non rotative.

2. Remorque selon la revendication 1, comprenant un frein de stationnement, caractérisée en ce que la force de freinage est transmise d'un frein de stationnement (13), par l'intermédiaire d'un second dispositif mécanique de transmission des forces, à un levier de freinage (8) du corps d'essieu (16, 17) monté de manière non rotative dans sa suspension (23).

3. Remorque à châssis en tandem selon la revendication 1, caractérisée en ce que le dispositif de transmission des forces comporte une tige de renvoi (6) qui, à l'une de ses extrémités, est reliée de manière articulée à une barre de traction (5) du dispositif à inertie (1) et qui, à son autre extrémité, est articulée sur une tige de pression (7) qui agit, de manière articulée, sur un levier de freinage (8) du corps d'essieu (16) arrière, dans le sens de la marche, monté en rotation de manière limitée dans sa suspension, et en ce que la tige de renvoi (6) agit sur un levier de freinage (8) destiné au corps d'essieu (17) avant, dans le sens de la marche, par l'intermédiaire d'une liaison articulée.

4. Remorque selon les revendications 2 et 3, caractérisée en ce que le frein de stationnement (13) agit, par l'intermédiaire d'un second dispositif mécanique de transmission des forces conçu sous la forme d'un organe de traction (12), sur l'une des extrémités d'un levier d'actionnement (10) qui, à son autre extrémité, est articulé sur au moins un levier de freinage (8) du corps d'essieu (17) avant, dans le sens de la marche, et qui comporte, en son centre, la liaison articulée avec la tige de renvoi (6).

5. Remorque à châssis en tandem selon l'une quelconque des revendications 1 à 4, caractérisée en ce que les extrémités voisines de chacun des ressorts à lames (20, 21) voisins dans le sens de la marche prennent appui sur un bras de compensation (22) qui, en son centre, est monté de manière pivotante sur le châssis du véhicule.

6. Remorque à essieu avant directeur selon la revendication 1, caractérisée en ce que le dispositif de transmission des forces comprend un balancier (29) qui est monté de manière articulée sur une tige de maintien (28) du dispositif à inertie (1), et aux deux extrémités duquel sont accrochés des câbles (30, 31) qui agissent chacun sur le levier de freinage (8) de chacun des corps d'essieux (16, 17).

7. Remorque selon les revendications 2 et 5, caractérisée en ce que le frein de stationnement (13) agit de manière articulée, par l'intermédiaire d'un dispositif mécanique de transmission des forces composé d'une barre de pression (44), d'une barre de renvoi (45) et d'une barre de traction (46), sur un élément d'actionnement (47) monté de manière pivotante sur la partie rotative d'une sellette tournante (25) de l'essieu avant directeur (11), des bras de leviers de l'élément d'actionnement (47) agissant sur des articulations à chapes (32, 33) qui relient les câbles (30, 31) accrochés au balancier (29) à des câbles (34, 35) menant aux leviers de freinage (8), les bras de leviers étant traversés par les axes des articulations à chapes.
